# FASCICULE DE BREVET EUROPEEN

(11) **EP 3 881 048 B1**
(45) Date de publication et mention de la délivrance du brevet: **06.05.2026**
(21) Numéro de dépôt: 19827774.1
(22) Date de dépôt: 13.11.2019
(51) Int. Cl.: G01N 1/22, G01N 30/06, G01N 1/24, G01N 30/72, G01N 1/40, G01N 30/88, G01N 30/46, G01N 1/02

(54) **DISPOSITIF PERMETTANT DE PRÉLEVER LES COMPOSÉS ORGANIQUES VOLATILS**
VORRICHTUNG ZUR ENTFERNUNG VON FLÜCHTIGEN ORGANISCHEN VERBINDUNGEN
DEVICE FOR REMOVING VOLATILE ORGANIC COMPOUNDS

(30) Priorité: 13.11.2018 FR 1871496
(43) Date de publication de la demande: 22.09.2021
(73) Titulaire: L'etat Français Représenté Par Le Ministère De L'intérieur, 92130 Issy les Mulineaux (FR)
(72) Inventeur: COGNON, Guillaume, 95300 Pontoise (FR); CUZUEL, Vincent, 95300 Pontoise (FR)
(74) Mandataire: Yes My Patent
(86) Numéro de dépôt international: PCT/FR2019/000184
(87) Numéro de publication internationale: WO 2020/099735

(56) Documents cités:
- EP-A1- 3 088 887
- EP-B1- 2 177 153
- CN-U- 204 495 779
- JP-A- 2001 235 405
- US-A1- 2014 260 974
- US-A1- 2018 038 777
- ZHANG Z M ET AL: "The study of fingerprint characteristics of the emanations from human arm skin using the original sampling system by SPME-GC/MS", JOURNAL OF CHROMATOGRAPHY B, ELSEVIER, AMSTERDAM, NL, vol. 822, no. 1-2, 5 August 2005 (2005-08-05), pages 244 - 252, XP027627170, ISSN: 1570-0232, [retrieved on 20050805]
- MUSTEATA ET AL: "In vivo sampling with solid phase microextraction", JOURNAL OF BIOCHEMICAL AND BIOPHYSICAL METHODS, AMSTERDAM, NL, vol. 70, no. 2, 16 February 2007 (2007-02-16), pages 181 - 193, XP005892131, ISSN: 0165-022X, DOI: 10.1016/J.JBBM.2006.07.006

## Description

La présente invention concerne un dispositif de prélèvement d'échantillon permettant de prélever les composés organiques volatils dans l'air, ainsi qu'une méthode de caractérisation des composés organiques volatils et l'utilisation de ce dispositif pour caractériser la signature odorante d'un individu et permettre à un chien d'identifier un individu à partir de sa signature odorante.

Le domaine de l'invention concerne en particulier le domaine du prélèvement des composés organiques volatils.

A ce jour il existe dans l'état de la technique deux types de dispositifs de prélèvement d'échantillon de molécules organiques volatiles : d'une part les dispositifs de prélèvement directs consistant à placer une phase adsorbante \directement sur l'objet ou individu à étudier pour collecter les composés et d'autre part les dispositifs de prélèvement indirects par aspiration d'air.

Parmi, les dispositifs de prélèvement direct, les compresses sont très souvent utilisées pour les prélèvements d'échantillon afin de récolter un grand nombre de molécules organiques volatiles, mais entraînent hélas un bruit de fond et une contamination du fait de la présence de composés non volatils influençant les résultats en laboratoire.

Les dispositifs de prélèvement indirects basés sur l'aspiration de l'air, généralement couplés avec une pompe, permettent de réduire le bruit généré par les composés non-volatils, et de s'affranchir de la présence de la personne lors du prélèvement.

On retrouve ainsi des dispositifs de prélèvements où une pompe est couplée à un dispositif de type Micro extraction sur phase solide (SPME) afin d'enrichir une fibre contenue dans ce dispositif. Le principe repose sur l'extraction sans solvant suivie d'une concentration de composés, qui se trouvent à l'état de traces dans un liquide ou un gaz par adsorption sur une fibre composée de silice fondue (Arthur and Pawliszyn, 1990). Le dispositif SPME tel que décrit dans le brevet EP1955068 et la publication de Meneses, et al. 2013 montre cependant des résultats trop peu précis dus aux trop faibles quantités adsorbées, et aux contaminations suivant les échantillons d'air. Du fait de l'adsorption sur fibre de silice fondue, il est également impossible de réutiliser l'échantillon pour certaines analyses supplémentaires.

Les dispositifs de type Scent Transfer Unit (STU) sont également des dispositifs de prélèvement indirects, basés sur la capture sur un support adsorbant tel des compresses, de molécule organiques volatiles présentes dans l'air aspiré, suivie par une chromatographie classique (Eckenrode et al. 2006, Ensminger et al. 2010). Ces dispositifs tel que décrit dans le brevet US7448288, utilisent des compresses stériles ou compresses hongroises directement à l'air libre à l'extrémité du dispositif, ce qui entraine des contaminations influençant les analyses ultérieures en laboratoire, tout comme le passage du flux d'air directement dans la pompe. De plus, la constitution même du Scent Transfer Unit ne permet pas un enrichissement optimal du support adsorbant.

Enfin, les dispositifs de type canister sont des dispositifs couplés à des pompes dans leur forme active permettant le prélèvement d'échantillons d'air, qui pourront ensuite être utilisés pour enrichir des supports telles des fibres SPME. Ces dispositifs sont généralement en acier inoxydable poli, traité par une couche spéciale de silice, afin de faciliter le "relargage" de l'air. Cependant il existe un risque de réactions des molécules organiques avec le métal du canister. De plus, les canisters ne contiennent pas de support sorbant et sont tributaires d'une méthode d'enrichissement d'un support sorbant ultérieur.

D'autres exemples des dispositifs de prélèvement d'échantillons volatiles peuvent être trouvés dans les publications JP2001235405A, EP3088887A1, CN204495779U.

Ainsi, il existe aujourd'hui un besoin pour des dispositifs permettant de prélever les composés organiques volatils présents dans l'air dans des quantités infinitésimales et permettant leur analyse efficace grâce à un support sorbant intégré au dispositif, qui sera enrichi efficacement pour permettre d'obtenir des résultats pertinents, et qui sera préservé des contaminations liées par exemple aux composés non-volatils.

Aujourd'hui, la Demanderesse innove dans le prélèvement des composés organiques volatils en proposant un nouveau dispositif pour répondre à ces besoins.

En effet, la Demanderesse a mis au point un dispositif permettant de prélever les composés organiques volatils dans l'air, comprenant une chambre de prélèvement, un système de pompage déporté basé sur une alternance de cycles d'aspiration et d'éjection du flux d'air, un support sorbant, un circuit permettant un système de recirculation du flux d'air entrant, et ledit système de pompage déporté basé sur une alternance de cycles d'aspiration et d'éjection du flux d'air est une pompe péristaltique. Ledit dispositif comprend dans un mode de réalisation préféré des connectiques à usage unique. De plus, l'invention comprend également une méthode de caractérisation des composés organiques volatils prélevés à l'aide du dispositif, et l'utilisation du support sorbant enrichi grâce au dispositif selon l'invention pour caractériser la signature odorante d'un individu, et permettre à un chien d'identifier un individu à partir de sa signature odorante

Ainsi selon un premier aspect, l'invention concerne un dispositif permettant de prélever les composés organiques volatils dans l'air comprenant les étapes de :
- - Prélèvement des composés organiques volatils ;
- - Retrait du support sorbant (5) dudit dispositif de prélèvement ;
- - Désorption des composés organiques volatils ;
- - Chromatographie en phase gazeuse ;
- - Spectrométrie de masse
l'étape de prélèvement des composés organiques volatils étant réalisée à l'aide d'un dispositif selon l'une quelconque des revendications précédentes

Par composés organiques volatils sont entendus selon l'invention et selon l'article 2 de la directive 1999/13/CE du Conseil européen du 11 mars 1999 des composés contenant au moins l'élément carbone et un ou plusieurs des éléments suivants : hydrogène, halogènes, oxygène, soufre, phosphore, silicium ou azote, à l'exception des oxydes de carbone et des carbonates et bicarbonates inorganiques, et ayant une pression de vapeur de 0,01 kPa ou plus à une température de 293,15 K ou ayant une volatilité correspondante dans les conditions d'utilisation particulières. On peut ainsi les retrouver sur un lieu, une surface, dans un volume, etc.

Des exemples de composés organiques volatiles identifiables par le dispositif selon l'invention peuvent être, sans que ce dispositif ne se limite à cette liste :
(-)-Carvone ; (.+/-.)-Eldanolide ; (+)-N-Allyl-.alpha.-methylbenzylamine ; (1R)-2,6,6-Trimethylbicyclo[3,1.1]hept-2-ene ; (1R,3S,4R,5S)-1-Isopropyl-4- ; methylbicyclo[3.1.0]hexan-3-yl acetate-rel- ; (2R,5R)-2-Methyl-5-(prop-1-en-2-yl)-2- vinyltetrahydrofuran ; (2R,5S)-2-Methyl-5-(prop-1-en-2-yl)-2- ; vinyltetrahydrofuran ; (3E,7E)-4,8,12-Trimethyltrideca-1,3,7,11-tetraene ; "(3R,3aS,6S,7R)-3,6,8,8- ; Tetramethyloctahydro-1H-3a,7- methanoazulen-6-ol" ; (7a-Isopropenyl-4,5-dimethyloctahydroinden- 4-yl)methanol ; (E)-3(10)-Caren-4-ol ; (E)-3-Methyl-5-((1R,4aR,8aR)-5,5,8a-trimethyl- 2-methylenedecahydronaphthalen-1-yl)pent- 2-en-1-ol ; (S)-(+)-6-Methyl-1-octanol ; (Z)-5-Decene ; alpha. Isomethyl ionone ; .alpha.,.alpha.'-Dihydroxy-m- diisopropylbenzene ; .alpha.-Bisabolol ; .alpha.-Cubebene ; .alpha.-Ethyl-.alpha.-methylbenzyl alcohol ; .alpha.-lonone ; .alpha.-Methylstyrene ; .alpha.-Pinene ; .beta.-Hydroxypyruvic acid, trimethylsilyl ether, trimethylsilyl ester ; .beta.-Longipinene ; .beta.-Myrcene ; .beta.-Ocimene ; .beta.-Pinene ; .beta.-Pinene, 3-(acetylmethyl)- ; .gamma.-Terpinene ; 1-(2-Pyrazinyl)-1-ethanol ; 1(3H)-Isobenzofuranone ; 1-(4-Methoxyphenyl)-2,3-dimethylpent-4-en- 2-ol ; 1-(4-tert-Butylphenyl)propan-2-one ; 1,1,4,7-Tetramethyldecahydro-1H- cyclopropa[e]azulene-4,7-diol ; 1,10-Dimethyl-2-methylene-trans-decalin ; 1,1'-Bicyclooctyl ; 1,1'-Biphenyl, 4-methyl- ; 1,2-Benzenedicarboxylic acid, bis(2- methylpropyl) ester ; 1,2-Cyclohexanediol, 1-methyl-, trans- ; 1,2-Cyclohexanediol, 1-methyl-4-(1-methylethenyl)- ; 1,2-Ethanediol ; 1,2-Ethanediol, monobenzoate ; 1,2-Octanediol ; 1,2-Pentanediol ; 1,3,5-Cycloheptatriene, 2,4-di-t-butyl-7,7-dimethyl- ; 1,3,5-Hexatriene, 3-methyl-, (Z)- ; 1,3,5-Triazine, 1,2,3,4-tetrahydro-3-tert-butyl- 6-butylaminomethylthio- ; 1,3-Benzodioxole-5-propanal, .alpha.-methyl- ; 1,3-Butanediol, (S)- ; 1,3-Cyclohexanediol, 2-methyl-2-nitro-, monoacetate (ester), [1s- (1.alpha.,2.beta.,3.alpha.)]- ; 1,3-Dimethylbutyl butyrate ; 1,3-Dioxane, 2,4-dimethyl- ; 1,3-Dioxolane-2-methanol ; 1,3-Octadiene ; 1,3-Pentanediol, 2,2,4-trimethyl- ; 1,4-Benzenediol, 2,6-bis(1,1-dimethylethyl)- ; 1,5-Heptadiene, 3,6-dimethyl- ; 1,5-Hexadiene-3,4-diol, 2,5-dimethyl- ; 1,5-Hexadiene-3,4-diol, 3,4-dimethyl- ; 1,6-Dioxacyclododecane-7,12-dione ; 1,6-Nonadien-3-ol, 3,7-dimethyl- ; 1,7,7-Trimethylbicyclo[2.2.1 ]heptan-6-ol ; 1,7-Octanediol, 3,7-dimethyl- ; 1,8-Nonadiene, 2,7-dimethyl-5-(1- methylethenyl)- ; 1,9-Tetradecadiene ; 10-Amino-10,11-dihydro-5- acetyldibenz[b,flazepine ; 10-Chlorotricyclo[4.2.2.0(1,5)]dec-7-ene ; 10-Methylnonadecane ; 10-Undecenal ; 10-Undecenenitrile ; 13-Methyltetradecanal ; 1-Butanamine, N-butyl-N-nitroso- ; 1-Butanol, 2-methyl- ; 1-Butanol, 3-methyl-, acetate ; 1-Butanol, 3-methyl-, benzoate ; 1-Butanol, TMS derivative ; 1-Decanol ; 1-Decanol, 2,2-dimethyl- ; 1-Decanol, 2-ethyl- ; 1-Decanol, 2-methyl- ; 1-Decene ; 1-Decene, 2,4-dimethyl- ; 1-Decene, 4-methyl- ; 1-Dodecanol ; 1-Dodecen-3-ol ; 1-Ethyl-2-pyrrolidinone ; 1H-3a,7-Methanoazulene, octahydro-3,8,8-trimethyl-6-methylene-, [3R- (3.alpha.,3a.beta.,7.beta.,8a.alpha.)]- ; 1-Heptanol ; 1-Heptanol, 2-propyl- ; 1-Hepten-6-one, 2-methyl- ; 1-Heptene, 5-methyl- ; 1-Hexadecanol, 2-methyl- ; 1-Hexene, 4-methyl- ; 1H-Inden-1-one, 2,3-dihydro- ; 1H-Inden-1-one, 2,3-dihydro-3,3,5,6- tetramethyl- ; 1H-Inden-1-one, 2,3-dihydro-3,3-dimethyl- ; 1H-Pyrrole, 3-methyl- ; 1H-Pyrrole-2-carboxaldehyde, 1-methyl- ; 1H-Pyrrolo[3,4-c]pyridine-1,3,4(2H,5H)-trione, 6-methyl- ; 1-Methoxy-2-propyl acetate ; 1-Nonanol ; 1-Nonanol, 4,8-dimethyl- ; 1-Nonene ; 1-Octanol ; 1-Octanol, 2-butyl- ; 1-Octanol, 2-methyl- ; 1-Octanol, 3,7-dimethyl-, (S)- ; 1-Octen-3-ol ; 1-Octene ; 1-Oxaspiro[2.5]octane, 5,5-dimethyl-4-(3- methyl-1,3-butadienyl)- ; 1-Pentadecene ; 1-Pentanol ; 1-Pentanol, 2-methyl- ; 1-Penten-3-one, 1-(2,6,6-trimethyl-2- cyclohexen-1-yl)- ; 1-Phenoxypropan-2-ol ; 1-Phenyl-2-octanone ; 1-Propanol, 2-(2-hydroxypropoxy)- ; 1-Propanol, 2,2'-oxybis- ; 1-Propanol, 2-methyl- ; 1-Propylcyclopentene ; 1-Tetradecanol ; 1-Tetradecanol, methyl ether ; 1-Tetradecene ; 1-Tetrazol-2-ylethanone ; 1-Tridecene ; 1-Undecanol ; 1-Undecene ; 1-Undecene, 4-methyl- ; 1-Undecene, 8-methyl- ; 1-Undecene, 9-methyl- ; 2(3H)-Furanone, 5-butyldihydro- ; 2(3H)-Furanone, 5-ethenyldihydro-5-methyl- ; 2(3H)-Furanone, 5-ethyldihydro- ; 2(3H)-Furanone, 5-ethyldihydro-5-methyl- ; 2(3H)-Furanone, 5-heptyldihydro- ; 2(3H)-Furanone, 5-hexyldihydro- ; 2(3H)-Furanone, 5-methyl- ; 2(3H)-Furanone, dihydro-5-(2-octenyl)-, (Z)- ; 2(3H)-Furanone, dihydro-5-methyl- ; 2(3H)-Furanone, dihydro-5-methyl-5-(2- methylpropyl)- ; 2(3H)-Furanone, dihydro-5-methyl-5-phenyl- ; 2(3H)-Furanone, dihydro-5-propyl- ; 2(5H)-Furanone ; 2(5H)-Furanone, 3-methyl- ; 2(5H)-Furanone, 5,5-dimethyl- ; 2-(Methylsulphonyl)propane ; 2,2,4-Trimethyl-1,3-pentanediol diisobutyrate ; 2,2-Dimethyl-1,3-butanediol ; 2,3-Dichlorobenzonitrile ; 2,3-Dichlorobenzyl alcohol ; 2,3-Octanedione ; 2,4,6-Cycloheptatriene-1-carbonitrile ; 2,4,6-Octatriene, 2,6-dimethyl-, (E,Z)- ; 2,4,7,9-Tetramethyl-5-decyn-4,7-diol ; 2,4-Decadien-1-ol, (E,Z)- ; 2,4-Decadienal ; 2,4-Dichlorophenethyl alcohol ; 2,4-Dimethyl-1-heptene ; 2,4-Di-tert-butylphenol ; 2,4-Hexadienal, (E,E)- ; 2,5-cyclohexadien-1-one, 2,6-bis(1,1- dimethylethyl)-4-hydroxy-4-methyl- ; 2,5-Cyclohexadiene-1,4-dione, 2,6-bis(1,1- dimethylethyl)- ; 2,5-Dimethyl-1,5-hexadien-3-ol ; 2,5-Dimethylhexane-2,5-dihydroperoxide ; 2,5-di-tert-Butyl-1,4-benzoquinone ; 2,5-Furandione, 3,4-dimethyl- ; 2,5-Furandione, 3-methyl- ; 2,5-Furandione, dihydro-3-methyl- ; 2,5-Furandione, dihydro-3-methylene- ; 2,5-Hexanediol, 2,5-dimethyl- ; 2,5-Hexanedione ; 2,6,10-Trimethyltridecane ; 2,6-Dichloroacetophenone ; 2,6-Dichlorostyrene ; 2,6-Dimethyl-6-nitro-2-hepten-4-one ; 2,6-Octadien-1-ol, 3,7-dimethyl-, (Z)- ; 2,6-Octadienal, 3,7-dimethyl-, (E)- ; 2,6-Octadienal, 3,7-dimethyl-, (Z)- ; 2,6-Octadiene, 4,5-dimethyl- ; 2-Butanone, 1-(1,3-benzodioxol-5-yl)- ; 2-Butanone, 4-(2,2-dimethyl-6- methylenecyclohexyl)- ; 2-Butanone, 4-(4-methoxyphenyl)- ; 2-Butanone, 4-(5-methyl-2-furanyl)- ; 2-Buten-1-ol, 2-ethyl-4-(2,2,3-trimethyl-3- cyclopenten-1-yl)- ; 2-Butenal, 2-ethenyl- ; 2-Butenal, 2-ethyl- ; 2-Butenal, 2-methyl-, (E)- ; 2-Butenal, 3-methyl- ; 2-Butene ozonide ; 2-Butenoic acid, 2-methyl-, 2-methyl-2- propenyl ester, (E)- ; 2-Butenoic acid, 3-methyl- ; 2-Cyclohexen-1-one ; 2-Cyclohexen-1-one, 4-(1-methylethyl)- ; 2-Cyclopenten-1-one, 2-methyl- ; 2-Cyclopenten-1-one, 2-pentyl- ; 2-Cyclopenten-1-one, 4-hydroxy-3-methyl-2- (2-propenyl)- ; 2-Cyclopentene-1-carboxylic acid, 1-methyl-, methyl ester ; 2-Decanone ; 2-Decenal, (E)- ; 2-Dodecanone ; 2-Dodecene, (E)- ; 2-Dodecene, (Z)- ; 2-Ethylacrolein ; 2-Ethylbutyric acid, dodecyl ester ; 2-Ethylbutyric acid, eicosyl ester ; 2-Ethylhexanol ; 2-Ethylhexyl salicylate ; 2-Ethylhexyl trans-4-methoxycinnamate ; 2-Ethyl-trans-2-butenal ; 2-Ethynyl pyridine ; 2-Furancarboxylic acid methyl ester ; 2-Furanmethanol, tetrahydro-5-methyl- ; 2-Furanone, 2,5-dihydro-3,5-dimethyl ; 2-Heptanol, 5-methyl- ; 2-Heptanone ; 2-Heptene, 3-methyl- ; 2-Hexanone ; 2-Hexene, 6,6-dimethoxy-2,5,5-trimethyl- ; 2-Hexyl-1-octanol ; 2H-Pyran, tetrahydro-2-(2-propynyloxy)- ; 2H-Pyran-2-one, 6-ethyltetrahydro- ; 2H-Pyran-2-one, tetrahydro- ; 2H-Pyran-2-one, tetrahydro-6-methyl- ; 2H-Pyran-2-one, tetrahydro-6-pentyl- ; 2H-Pyran-2-one, tetrahydro-6-propyl- ; 2H-Pyran-2-one, tetrahydro-6-undecyl- ; 2-hydroxy-2-methyl-4-heptanone ; 2-Hydroxy-3-acetyl-6-methyl-4-pyrone ; 2-Hydroxy-iso-butyrophenone ; 2-Isopropenyl-5-methylhex-4-enal ; 2-Isopropyl-5-methyl-1-heptanol ; 2-Isopropylidene-5-methylhex-4-enal ; 2-Methoxy-3-methyl-butyric acid, methyl ester ; 2-n-Butyl furan ; 2-n-Butylacrolein ; 2-n-Octylfuran ; 2-Nonadecanone ; 2-Nonanone ; 2-Nonenal ; 2-Nonenal, (E)- ; 2-Nonenal, 8-oxo- ; 2-Nonene ; 2-Norbornyl acetate ; 2-Octanone ; 2-Octen-1-ol, (E)- ; 2-Octen-1-ol, 3,7-dimethyl- ; 2-Octen-1-ol, 3,7-dimethyl-, isobutyrate, (Z)- ; 2-Octenal, (E)- ; 2-Octene, (E)- ; 2-Octene, 2-methyl-6-methylene- ; 2-Octyn-1-ol ; 2-Oxepanone ; 2-Pentadecanone ; 2-Pentanol, 2,4-dimethyl- ; 2-Pentanol, 3-chloro-2-methyl- ; 2-Pentanone, 3,3,4,4-tetramethyl- ; 2-Pentenal, (E)- ; 2-Phenoxyethyl isobutyrate ; 2-Phenylethyl acetate ; 2-Propanol, 1-(2-butoxy-1-methylethoxy)- ; 2-Propanol, 1-(2-methoxy-1-methylethoxy)- ; 2-Propanol, 1,1'-[(1-methyl-1,2- ethanediyl)bis(oxy)]bis- ; 2-Propanol, 1,1'-oxybis- ; 2-Propanol, 1-[2-(2-methoxy-1-methylethoxy)- 1-methylethoxy]- ; 2-Propanol, 1-butoxy- ; 2-Propanone, 1-methoxy- ; 2-Propen-1-ol, 3-phenyl- ; 2-Propenoic acid, (1-methyl-1,2- ethanediyl)bis[oxy(methyl-2,1-ethanediyl)] ester ; 2-Propenoic acid, 2-methyl-, 3,3,5- trimethylcyclohexyl ester ; 2-Propenoic acid, 3-(2-hydroxyphenyl)-, (E)- ; 2-Propenoic acid, tridecyl ester ; 2-Propyl-1-pentanol ; 2-Pyrrol[tert- butyl(dimethyl)silyl]oxymorphopropan-1-ol ; 2-Pyrrolidinone, 1-methyl- ; 2-Tetradecanone ; 2-Tridecanone ; 2-Undecanone ; 2-Undecanone, 6,10-dimethyl- ; 2-Undecenal ; 2-Undecene, 3-methyl-, (Z)- ; 2-Undecene, 6-methyl-, (Z)- ; 3-((1S,5S,6R)-2,6-Dimethylbicyclo[3.1.1]hept-2-en-6-yl)propanal ; 3-(4-Isopropylphenyl)-2-methylpropionaldehyde ; 3,5,9-Undecatrien-2-one, 6,10-dimethyl-, (E,Z)- ; 3,5-Heptadien-2-one, 6-methyl-, (E)- ; 3,6-Dioxa-2,4,5,7-tetrasilaoctane, 2,2,4,4,5,5,7,7-octamethyl- ; 3,7-Nonadien-2-ol, 4,8-dimethyl- ; 3-Allyl-6-methoxyphenol ; 3-Buten-1-ol, 3-methyl- ; 3-Buten-2-one, 4-(2,6,6-trimethyl-1-cyclohexen-1-yl)- ; 3-Carene ; 3-Cyclohexen-1-ol, 1-methyl-4-(1-methylethyl)- ; 3-Cyclohexen-1-ol, 4-methyl-1-(1- methylethyl)-, (R)- ; 3-Cyclohexene-1-carboxaldehyde ; 3-Cyclohexene-1-carboxaldehyde, 1-methyl- ; 3-Cyclohexene-1-carboxaldehyde, 2,4,6- trimethyl- ; 3-Decene, 2,2-dimethyl-, (E)- ; 3-Decenoic acid ; 3-Dodecanol ; 3-Dodecene, (E)- ; 3-Dodecene, (Z)- ; 3-Ethyl-4,4-dimethyl-2-(2- methylpropenyl)cyclohex-2-enone ; 3-Furanmethanol ; 3-Heptyne ; 3-Hexanone, 5-methyl- ; 3-Hydroxy-3-phenylbutan-2-one ; 3-Isopropyl-4-methyl-1-pentyn-3-ol ; 3-Methoxy-4-methylheptane ; 3-Methoxyacetophenone ; 3-Methyl-2-butenoic acid, undec-2-enyl ester ; 3-Methylcyclopentyl acetate ; 3-Nonanol ; 3-Nonanone ; 3-Octanol, 3,6-dimethyl- ; 3-Octanol, 3,7-dimethyl- ; 3-Octanol, acetate ; 3-Octanone ; 3-Octene, 2,2-dimethyl- ; 3-Pentadecanone ; 3-Penten-2-one ; 3-Penten-2-one, (E)- ; 3-Penten-2-one, 4-(2,6,6-trimethyl-2- cyclohexen-1-yl)- ; 3-Pentenoic acid, 4-methyl- ; 3-Undecene, 4-methyl- ; 4-(t-Butyl)benzaldehyde ; 4,14-Dimethyl-11- isopropyltricyclo[7.5.0.0(10,14)]tetradec-4-en- 8-one ; 4,7-methano-1H-inden-5-ol, 3a,4,5,6,7,7a- hexahydro-, acetate ; 4,7-Methano-1H-indenol, hexahydro- ; 4,8,12-Tetradecatrienal, 5,9,13-trimethyl- ; 4-Butoxy-2-butanone ; 4-Cyanocyclohexene ; 4-Cyclopentene-1,3-dione ; 4-Ethylbenzoic acid, cyclobutyl ester ; 4-Ethylbenzoic acid, decyl ester ; 4-Hepten-3-ol, 4-methyl- ; 4H-Inden-4-one, 1,2,3,5,6,7-hexahydro- 1,1,2,3,3-pentamethyl- ; 4-Methyl-2,4-bis(p-hydroxyphenyl)pent-1- ene, 2TMS derivative ; 4-Octanol ; 4-Octanone ; 4-Phenylsemicarbazide ; 4-Terpinenyl acetate ; 4-tert-Butylcyclohexyl acetate ; 4-Tridecene, (Z)- ; 4-Undecene, 5-methyl- ; 4-Undecene, 8-methyl-, (Z)- ; 5,9-Undecadien-1-yne, 6,10-dimethyl- ; 5,9-Undecadien-2-one, 6,10-dimethyl-, (Z)- ; 5-Dodecyne ; 5-Formylsalicylaldehyde ; 5H-1-Pyrindine ; 5-Hepten-2-one, 6-methyl- ; 5-Heptenal, 2,6-dimethyl- ; 5-Hexen-2-one, 5-methyl- ; 5-Hexen-2-one, 5-methyl-3-methylene- ; 5-Hexenal, 4-methylene- ; 5-Hydroxy-2-pyridinecarbaldehyde ; 5-Methyl-1-phenyloctane ; 5-Nonanol ; 5-Nonanone ; 5-Tridecene, (Z)- ; 6-(5-Methyl-furan-2-yl)-hexan-2-one ; 6,6-Dimethyl-2-(3-oxobutyl)bicyclo[3.1.1]heptan-3-one ; 6-Dodecene, (E)- ; 6-Dodecene, (Z)- ; 6-Methoxy-2-hexanol, TMS derivative ; 6-Methyl-3,5-heptadiene-2-one ; 6-Nonenal, (E)- ; 6-Octen-1-ol, 3,7-dimethyl-, acetate ; 6-Tridecanol, 3,9-diethyl- ; 7,8-Diazabicyclo[4.2.2]deca-2,4,7,9-tetraen-7- oxide ; 7-Acetyl-6-ethyl-1,1,4,4-tetramethyltetralin ; 7a-Isopropenyl-4,5- dimethyloctahydroindene-4-carboxylic acid ; 7-Methyl-octadecane ; 7-Octen-2-ol, 2,6-dimethyl- ; 7-Tetradecene ; 7-Tetradecene, (Z)- ; 8-Quinolinol, 2-methyl- ; 9-Decen-2-one, 5-methylene- ; 9-Dodecyn-1-ol ; 9-methylheptadecane ; 9-Oxabicyclo[3.3.1]nonan-2-one, 3-methyl-6- (tetrahydro-2H-2-pyranyloxy)- ; Acenaphthene ; Acetaldehyde ; Acetaldehyde, (3,3- dimethylcyclohexylidene)-, (E)- ; Acetamide, N,N-dibutyl- ; Acetamide, N,N-diethyl- ; Acetic acid ; Acetic acid, 2-acetoxymethyl-1,2,3- trimethylbutyl ester ; Acetic acid, 2-ethylhexyl ester ; Acetic acid, 2-propyltetrahydropyran-3-yl ester ; Acetic acid, butyl ester ; Acetic acid, phenylmethyl ester ; Acetone ; Acetophenone ; Ambrox ; Amylene hydrate ; Anethole ; Arsenous acid, tris(trimethylsilyl) ester ; Azulene, 1,2,3,5,6,7,8,8a-octahydro-1,4- dimethyl-7-(1-methylethenyl)-, [1S-(1.alpha.,7.alpha.,8a.beta.)]- ; Benzaldehyde ; Benzaldehyde, 2,4-dichloro- ; Benzaldehyde, 2-hydroxy- ; Benzaldehyde, 2-methyl- ; Benzaldehyde, 3-hydroxy-4-benzyloxy- ; Benzaldehyde, 3-methyl- ; Benzaldehyde, 4-methoxy- ; Benzaldehyde, 4-methyl- ; Benzenamine, 2-(1-methylethenyl)- ; Benzenamine, N-ethyl- ; Benzene, (1-butylheptyl)- ; Benzene, (1-butylhexyl)- ; Benzene, (1-ethyldecyl)- ; Benzene, (1-ethylnonyl)- ; Benzene, (1-ethylundecyl)- ; Benzene, (1-methyldecyl)- ; Benzene, (1-methylnonyl)- ; Benzene, (1-pentylheptyl)- ; Benzene, (1-propylheptyl)- ; Benzene, (1-propylnonyl)- ; Benzene, (1-propyloctyl)- ; Benzene, 1-(1,5-dimethyl-4-hexenyl)-4- methyl- ; Benzene, 1,2,3,4-tetramethyl- ; Benzene, 1,2,4-trimethyl- ; Benzene, 1,2-dimethoxy-4-(1-propenyl)- ; Benzene, 1,3-bis(1-methylethenyl)- ; Benzene, 1,3-bis(1-methylethyl)- ; Benzene, 1,3-dichloro- ; Benzene, 1,3-dichloro-2-methyl- ; Benzene, 1,3-dimethyl- ; Benzene, 1,4-bis(1-methylethenyl)- ; Benzene, 1-ethyl-3-methyl- ; Benzene, 1-methoxy-4-pentyl- ; Benzene, 1-methyl-4-(1-methylethenyl)- ; Benzene, 2-ethyl-1,4-dimethyl- ; Benzene, nonyl- ; Benzene, propyl- ; Benzene, tert-butyl- ; Benzeneacetic acid, .alpha.-oxo-, methyl ester ; Benzenemethanol, .alpha.,.alpha.,4-trimethyl- ; Benzenemethanol, .alpha.-ethenyl-.alpha.- methyl- ; Benzenemethanol, .alpha.-methyl-, acetate ; Benzenemethanol, 4-(1,1-dimethylethyl)- ; Benzenepentanol, gamma.-methyl-, acetate ; Benzenepropanol, .alpha.,.alpha.-dimethyl- ; Benzenesulfonamide, N-ethyl-2-methyl- ; Benzoic acid ; Benzoic acid, 2,4-dichloro-, ethyl ester ; Benzoic acid, 2,6-dichloro-, methyl ester ; Benzoic acid, 2-hydroxy-, 2-methylbutyl ester ; Benzoic acid, 4-[6-(1,1-dimethylethyl)-2H-1,3- benzoxazin-3(4H)-yl]- ; Benzoic acid, undecyl ester ; Benzonitrile, 4-(4-propyl-1-cyclohexen-1-yl)- ; Benzophenone ; Benzothiazole ; Benzothiazole, 2-methyl- ; Benzyl alcohol ; beta-Caryophyllene ; Bicyclo[2.2.1]heptan-2-one, 1,3,7,7- tetramethyl- ; Bicyclo[2.2.2]octane, 1-methyl-4- (methylsulfonyl)- ; Bicyclo[3.1.1]heptan-2-one, 3,6,6-trimethyl- ; Bicyclo[3.1.1]heptan-2-one, 6,6-dimethyl-, (1R)- ; Bicyclo[3.1.1]heptan-3-one, 2,6,6-trimethyl- ; Bicyclo[3.1.1]heptane, 2,6,6-trimethyl-3-(2- propenyl)-, (1.alpha.,2.beta.,3.alpha.,5.alpha.)- ; Biphenyl ; Boric acid, 3TMS derivative ; Butanal, 2-ethyl- ; Butane, 1,1,3-trimethoxy- ; Butanedioic acid, hydroxy-, diethyl ester ; Butanenitrile, 3-methyl- ; Butanoic acid ; Butanoic acid, 3-chloro- ; Butanoic acid, pentyl ester ; Butyl acetate ; Butylated Hydroxytoluene ; Butyrolactone ; Camphene ; Camphor ; Caprolactam ; Carbamic acid, phenyl ester ; Carbamodithioic acid, diethyl-, methyl ester ; Carbonic acid, eicosyl prop-1-en-2-yl ester ; Carbonic acid, nonyl prop-1-en-2-yl ester ; Carbonic acid, octadecyl vinyl ester ; Carbonic acid, octyl vinyl ester ; Carbonic acid, prop-1-en-2-yl undecyl ester ; Carbonic acid, tridecyl vinyl ester ; Carotol ; Cedrol ; Cinnamaldehyde, (E)- ; Cinnamaldehyde, .alpha.-pentyl- ; cis-.beta.-Farnesene ; cis-3-Hexenyl salicylate ; cis-Chrysanthenol ; cis-Cyclohexane-1,4-dimethanol, diacetate ; cis-Hexahydrophthalide ; cis-Thujopsene ; Citronellol ; Cycloheptane, 4-methylene-1-methyl-2-(2- methyl-1-propen-1-yl)-1-vinyl- ; Cycloheptanone ; Cycloheptanone, 2-methyl- ; Cyclohexane, (2-methylpropyl)- ; Cyclohexane, (4-methylpentyl)- ; Cyclohexane, 1,1'-(1,2-dimethyl-1,2- ethanediyl)bis- ; Cyclohexane, 1,1,2-trimethyl- ; Cyclohexane, 1-ethenyl-1-methyl-2,4-bis(1- methylethenyl)-, [1S-(1.alpha.,2.beta.,4.beta.)]- ; Cyclohexane, 2-ethenyl-1,1-dimethyl-3-methylene- ; Cyclohexane, 2-ethyl-1,3-dimethyl- ; Cyclohexane, isocyanato- ; Cyclohexane, methyl- ; Cyclohexane, pentyl- ; Cyclohexanemethanol, 4-(1-methylethyl)-, cis- ; Cyclohexanemethanol, 4-(1-methylethyl)-, trans- ; Cyclohexanol, 1-methyl-4-(1-methylethenyl)- ; Cyclohexanol, 2-(1,1-dimethylethyl)- ; Cyclohexanol, 4-amino-, trans- ; Cyclohexanone ; Cyclohexanone, 5-methyl-2-(1-methylethyl)-, cis- ; Cyclohexene, 1-methyl-4-(1-methylethyl)-, (R)- ; Cyclohexene, 1-methyl-4-(1- methylethylidene)- ; Cyclohexene, 4-[(1E)-1,5-dimethyl-1,4- hexadien-1-yl]-1-methyl- ; Cyclooctane, methyl- ; Cyclooctene, 3-methyl- ; Cyclopent-4-ene-1,3-dione ; Cyclopenta[g]-2-benzopyran, 1,3,4,6,7,8- hexahydro-4,6,6,7,8,8-hexamethyl- ; Cyclopentadecanol ; Cyclopentane, 1,2-dibutyl- ; Cyclopentane, 1,3-dimethyl-, trans- ; Cyclopentane, 1-acetyl-1,2-epoxy- ; Cyclopentane, 1-butyl-2-propyl- ; Cyclopentane, 1-ethyl-2-methyl-, cis- ; Cyclopentane, 1-methyl-1-(2-methyl-2-propenyl)- ; Cyclopentane, 1-pentyl-2-propyl- ; Cyclopentane, 3-hexyl-1,1-dimethyl- ; Cyclopentane, decyl- ; Cyclopentane, nonyl- ; Cyclopentaneacetic acid, 3-oxo-2-pentyl-, methyl ester ; Cyclopentanecarboxylic acid, nonyl ester ; Cyclopentanone ; Cyclopentanone, 2-(2-octenyl)- ; Cyclopentanone, 2-methyl-3-(1-methylethyl)- ; Cyclopentene, 1-octyl- ; Cyclopropanecarboxaldehyde, 2-methyl-2-(4- methyl-3-pentenyl)-, trans-(.+-.)- ; Cyclopropanemethanol, .alpha.,2-dimethyl-2- (4-methyl-3-pentenyl)-, [1.alpha.(R*),2.alpha.]- ; Decanal ; Decane ; Decane, 1,1'-oxybis- ; Decane, 2,2-dimethyl- ; Decane, 2,6,7-trimethyl- ; Decane, 3,6-dimethyl- ; Decane, 4-methyl- ; Decanenitrile ; Decanoic acid ; Decanoic acid, methyl ester ; Decanoic acid, silver(1+) salt ; D-Galactose ; D-Glucitol, cyclic 1,3:2,4-bis(phenylboronate) 5,6-diacetate ; Dibenzofuran ; Dibutyl adipate ; Dichloroacetic acid, 4-pentadecyl ester ; Di-epi-.alpha.-cedrene ; Diethyl 2,5-pyridinedicarboxylate ; Diethyl Phthalate ; Diethylcyanamide ; Dimethyl phthalate ; Dimethyl sulfone ; Dimethylaminomethyl-phosphonic acid diisobutyl ester ; Diphenyl ether ; D-Limonene ; Docosane ; Dodecanal ; Dodecanamide, N-(2-hydroxyethyl)- ; Dodecane ; Dodecane, 1-chloro- ; Dodecane, 1-methoxy- ; Dodecane, 2,6,11-trimethyl- ; Dodecane, 4,9-dipropyl- ; Dodecanenitrile ; Dodecanoic acid ; Dodecanoic acid, 1-methylethyl ester ; Dodecanoic acid, methyl ester ; Dodecyl nonyl ether ; Dodecyl octyl ether ; E-11(12-Cyclopropyl)dodecen-1-ol ; Eicosane ; Eicosane, 10-methyl- ; Estragole ; Estran-3-one, 17-(acetyloxy)-2-methyl-, (2.alpha.,5.alpha.,17.beta.)- ; Ethanedioic acid, diethyl ester ; Ethanol ; Ethanol, 1-(2-butoxyethoxy)- ; Ethanol, 2-(2-butoxyethoxy)-, acetate ; Ethanol, 2-(dodecyloxy)- ; Ethanol, 2-(hexadecyloxy)- ; Ethanol, 2-(hexyloxy)- ; Ethanol, 2-(tetradecyloxy)- ; Ethanol, 2-butoxy- ; Ethanol, 2-nitro-, propionate (ester) ; Ethanol, 2-phenoxy- ; Ethanone, 1-(1-cyclohexen-1-yl)- ; Ethanone, 1-(2,3-dihydro-1 H-inden-5-yl)- ; Ethanone, 1-(2,5-dichlorophenyl)- ; Ethanone, 1-(2-methylphenyl)- ; Ethanone, 1-(3-methylenecyclopentyl)- ; Ethanone, 1-(3-methylphenyl)- ; Ethanone, 1,1'-(1,3-phenylene)bis- ; Ethanone, 1-[4-(1,1-dimethylethyl)phenyl]- ; Ethanone, 1-[4-(1-hydroxy-1- methylethyl)phenyl]- ; Ethanone, 2,2-dimethoxy-1,2-diphenyl- ; ETHYL (S)-(-)-LACTATE ; Ethyl 4-acetylbenzoate ; Ethyl 7-(2-oxocyclopentyl)heptanoate ; Ethyl acetoxycarbamate ; Ethyl butyl ketone ; Ethyl palmitate ; Ethyl Vanillin ; Ethylbenzene ; Ethylene brassylate ; Eucalyptol ; Fenchol ; Formaldehyde ; Formamide, N,N-dibutyl- ; Formamide, N,N-diethyl- ; Formic acid, butyl ester ; Formic acid, ethenyl ester ; Formic acid, hexyl ester ; Formic acid, tetrahydrofurfuryl ester ; Fumaric acid, butyl cis-hex-3-enyl ester ; Furan, 2,3-dihydro- ; Furan, 2-methyl- ; Furan, 2-pentyl- ; Furfural ; Geraniol ; Geranyl acetate ; Glycerol 1,2-diacetate ; Glycidol ; Glycolaldehyde dimethyl acetal ; Glycolic acid, 2TMS derivative ; Heneicosane ; Heptadecane ; Heptadecane, 2-methyl- ; Heptadecane, 3-methyl- ; Heptadecane, 7-methyl- ; Heptanal ; Heptane ; Heptane, 1-chloro- ; Heptane, 2,4,6-trimethyl- ; Heptane, 4-methyl- ; Heptanediamide, N,N'-di-benzoyloxy- ; Heptanoic acid ; Heptanonitrile ; Hexadecanal, 2-methyl- ; Hexadecane ; Hexadecane, 2,6,10,14-tetramethyl- ; Hexadecane, 2-methyl- ; Hexadecanoic acid, methyl ester ; Hexadecene ; Hexanal ; Hexanal, 2-ethyl- ; Hexane, 2,3-dimethyl- ; Hexane, 2-methyl- ; Hexane, 3,3,4-trimethyl- ; Hexane, 3-methyl- ; Hexanoic acid ; Hexanoic acid, 2-ethyl- ; Hexanoic acid, 3,5,5-trimethyl-, 2-ethylhexyl ester ; Hexyl octyl ether ; Hexylene glycol ; Hydrazinecarbothioamide, N-methyl- ; Hydrogen azide ; Indane ; Indol-2-one, 3-[2-(4-tert-butylphenyl)-2-oxoethyl]-3-hydroxy-5-methyl-1,3-dihydro- ; Indole ; Isobornyl acetate ; Isobutyl acetate ; Isolongifolol ; Isoneral ; Isophorone ; Isopinocarveol ; Isopropoxycarbamic acid, ethyl ester ; Isopropyl Alcohol ; Isopropyl myristate ; Isopropyl palmitate ; Isopropylcyclobutane ; Isopulegol ; Isopulegol acetate ; L-.alpha.-Terpineol ; Lactic acid ; Lilial ; Limonene ; Linalool ; Linalyl acetate ; Lincomycin ; Longifolenaldehyde ; Longifolene ; I-Pantoyl lactone ; I-Valine, N-(3-methyl-1-oxobutyl)-, methyl ester ; Malonic acid, bis(2-trimethylsilylethyl ester ; m-Aminophenylacetylene ; m-Chloroaniline ; Menthol ; Mesitylene ; Methacrolein ; Methanone, (1-hydroxycyclohexyl)phenyl- ; Methoxyacetic acid, 2-ethylhexyl ester ; Methyl 5-acetyl-2-methoxybenzoate ; Methyl 7,9-tridecadienyl ether ; Methyl Alcohol ; Methyl anthranilate ; Methyl Isobutyl Ketone ; Methyl octanoate ; Methyl salicylate ; Methyl tetradecanoate ; Methylamine, N-(1-methylheptylidene)- ; Methylparaben ; Myroxide ; N,N'-Diacetylethylenediamine ; N,N-Diethyl-N'-formyl-N'-methoxyurea ; Naphthalene ; Naphthalene, 1,2,3,5,6,8a-hexahydro-4,7- dimethyl-1-(1-methylethyl)-, (1S-cis)- ; Naphthalene, 1,6,7-trimethyl- ; Naphthalene, 1,7-dimethyl- ; Naphthalene, 1-methyl- ; Naphthalene, 2,3-dimethyl- ; Naphthalene, 2,7-dichloro- ; Naphthalene, 2-methoxy- ; Naphthalene, decahydro-, trans- ; n-Butyl ether ; n-Caproic acid vinyl ester ; n-Decanoic acid ; Neophytadiene ; n-Hexane ; n-Hexyl salicylate ; Nitric oxide ; n-Nonadecanol-1 ; n-Nonylcyclohexane ; Nona-3,5-dien-2-one ; Nonanal ; Nonane ; Nonane, 1-chloro- ; Nonane, 2-methyl-5-propyl- ; Nonane, 3-methyl- ; Nonane, 5-(1-methylpropyl)- ; Nonane, 5-(2-methylpropyl)- ; Nonanenitrile ; Nonanoic acid ; n-Pentadecanol ; n-Tridecan-1-ol ; Oct-3-enoic acid, oct-3-en-2-yl ester ; Octadecane ; Octadecane, 6-methyl- ; Octanal ; Octanal, 2-(phenylmethylene)- ; Octanal, 7-methoxy-3,7-dimethyl- ; Octane ; Octane, 1,1'-oxybis- ; Octane, 1-chloro- ; Octane, 2,7-dimethyl- ; Octane, 3,5-dimethyl- ; Octane, 4-methyl- ; Octanenitrile ; Octanoic acid ; Octanoic acid, octyl ester ; Octyl tetradecyl ether ; o-Cymene ; o-Hydroxybiphenyl ; Oleic acid, 2-hydroxyethyl ester stearate ; o-tert-Butyl cyclohexyl acetate 1 ; Oxacycloheptadec-8-en-2-one, (8Z) ; Oxacycloheptadecan-2-one ; Oxalic acid, 2-ethylhexyl hexyl ester ; Oxalic acid, 2-ethylhexyl isohexyl ester ; Oxalic acid, 2-ethylhexyl octyl ester ; Oxalic acid, 2-ethylhexyl pentadecyl ester ; Oxalic acid, 2TMS derivative ; Oxepine, 2,7-dimethyl- ; Oxime-, methoxy-phenyl-_ ; Oxirane, 3-ethyl-2,2-dimethyl- ; Oxirane, decyl- ; Oxiranemethanol, 3-methyl-3-(4-methyl-3-pentenyl)- ; o-Xylene ; p-Cresol ; Pentadecanal- ; Pentadecane ; Pentadecane, 2,6,10,14-tetramethyl- ; Pentadecane, 3-methyl- ; Pentadecane, 6-methyl- ; Pentadecane, 8-hexyl- ; Pentadecanoic acid ; Pentanal ; Pentane, 1-chloro- ; Pentane, 2,3,3-trimethyl- ; Pentanedioic acid, dimethyl ester ; Pentanoic acid ; Pentanoic acid, 2,4-dimethyl-3-oxo-, methyl ester ; Phenol ; Phenol, 2-(1,1-dimethylethyl)- ; Phenol, 2-(1,1-dimethylethyl)-6-methyl- ; Phenol, 2,4-dichloro- ; Phenol, 3-methyl- ; Phenol, 4-(1,1,3,3-tetramethylbutyl)- ; phenoxyethanol, TMS derivative ; Phenylethyl Alcohol ; Phthalic anhydride ; Piperonal ; p-Menth-8-en-1 -ol, stereoisomer ; p-Mentha-1,5,8-triene ; p-Mentha-1,5-dien-8-ol ; Propanal, 2-methyl-3-phenyl- ; Propanal, 3-methoxy- ; Propanamide, N-acetyl- ; Propane, 1,1,3,3-tetramethoxy- ; Propane, 1,1-dimethoxy-2-methyl- ; Propane, 2-ethoxy-2-methyl- ; Propane-1,3-diol, 2-methyl- ; Propanedioic acid, 2TMS derivative ; Propanoic acid ; Propanoic acid, 2,2-dimethyl- ; Propanoic acid, 2-[4-(1-formylethyl)phenyl]-, methyl ester ; Propanoic acid, 2-methyl-, 1-(1,1-dimethylethyl)-2-methyl-1,3-propanediyl ester ; Propanoic acid, 2-methyl-, 2-ethyl-3- hydroxyhexyl ester ; Propanoic acid, 2-methyl-, octyl ester ; Propanoic acid, 3-(2- hydroxycyclobutylidene)-2-methyl-, [R*,R*- (E)]- ; Propanol, [(butoxymethylethoxy)methylethoxy]- ; Propylene Carbonate ; Propylene Glycol ; Propylene ozonide ; Propylparaben ; p-Xylene ; Pyrazine, 2,6-dimethyl- ; Pyridine ; Pyridine, 3-methyl- ; Pyrrole ; Pyrrolidine, 1,1'-methylenebis- ; Quinoline ; Quinoline, 1,2-dihydro-2,2,4-trimethyl- ; rotundene ; Salicylic acid, 1-methylpropyl ether, 1- methylpropyl ester ; sec-Butyl acetate ; Spiro[2.4]heptane-5-methanol, 5-hydroxy- ; Squalene ; Stearic acid hydrazide ; Styrene ; Tetracosane ; Tetradecane ; Tetradecane, 2-methyl- ; Tetradecane, 3-methyl- ; Tetradecane, 5-methyl- ; Tetradecanoic acid ; Tetrahydropyrrolo[1,2-a]azetidin-2-one ; Tetramethyl thiourea ; tetramethylpyrazine ; Thioacetic acid ; Thiocyanic acid, ethyl ester ; Thiophene, tetrahydro-2-methyl- ; Toluene ; trans-.beta.-lonone ; trans-2-Dodecen-1-ol ; trans-8-Methyl-1.beta.-acetyl-hydrindane ; trans-Decalin, 2-methyl- ; Tri(1,2-propyleneglycol), monomethyl ether ; Triacetin ; Tridecanal ; Tridecane ; Tridecane, 3-methylene- ; Tridecane, 6-methyl- ; Tridecanenitrile ; Tridecanoic acid ; Tridecanoic acid, 3-hydroxy-, ethyl ester ; Triethyl citrate ; Undec-10-ynoic acid, isobutyl ester ; Undecanal ; Undecanal, 2-methyl- ; Undecane ; Undecane, 2,5-dimethyl- ; Undecane, 2,7-dimethyl- ; Undecane, 2-methyl- ; Undecane, 3,6-dimethyl- ; Undecane, 3-methyl- ; Undecane, 3-methylene- ; Undecane, 6-ethyl- ; Undecane, 6-methyl- ; Undecanenitrile ; Undecanoic acid ; Vanillin ; Z-2-Octadecen-1-ol acetate.

Par chambre de prélèvement est entendu le « nez » du dispositif, à savoir l'endroit par lequel le flux d'air entre dans le dispositif.

Par système de pompage déporté basé sur une alternance de cycles d'aspiration et d'éjection du flux d'air est entendu selon l'invention un système de pompage de l'air permettant de ne pas polluer le système, par exemple par des particules métalliques provenant de la pompe, ou toute sorte de composés organiques volatiles issus des plastiques ou tout autre élément de la pompe, ou encore par des vapeurs résiduelles au sein du mécanisme de pompage issues d'un prélèvement précédent et polluant ainsi le prélèvement suivant.

Des tels systèmes de pompage sont les pompes péristaltiques basée sur la compression et la décompression en alternance d'un tuyau ou d'un tube dans lequel est maintenu le gaz ou le liquide, le flux d'air ne passant pas directement dans la pompe. Une exemple de système de pompage similaire, utile pour comprendre l'invention, peut être un système utilisant deux pompes ayant des propriétés complémentaires afin d'obtenir un effet pulsé, ou encore un dispositif permettant sous l'action d'un courant de déformer un matériau qui reprendra ensuite sa forme initiale, l'alternance de ces déformations générant un flux d'air pulsé.

Dans l'invention présente, ledit système de pompage est une pompe péristaltique.

Par support sorbant est entendu selon l'invention un support capable de retenir les composés organiques volatils contenus dans le flux d'air qui le traverse. Par retenir les composés organiques volatils est entendu selon l'invention que ceux-ci sont fixés par processus physique et/ou chimique à la surface ou à l'intérieur dudit support. Cette rétention est réversible et les composés peuvent être relargués par des techniques de désorption.

Par circuit permettant un système de recirculation du flux d'air entrant est entendu selon l'invention un système qui permet que le flux d'air soit réintroduit dans la chambre de prélèvement après passage dans la phase sorbante, et qu'une grande partie de l'air ayant déjà parcouru le support sorbant soit repompé par le dispositif pour enrichir à nouveau le support sorbant.

De manière préférée selon l'invention, ledit support sorbant est un support absorbant. On entend par support absorbant un support capable de mettre en **œuvre un** processus physique et/ou chimique afin de laisser entrer les composés organiques volatils en son sein, et de les retenir. Cette rétention est réversible et les composés peuvent être relargués par des techniques de désorption.

De manière préférée selon l'invention, ledit support absorbant est choisi parmi les cyclodextrines, le bisulfite de sodium, et/ou le dinitrophénylhydrazine.

De manière préférée selon l'invention, ledit support sorbant est un support adsorbant. On entend par support adsorbant un support capable de mettre en œuvre un processus physique et/ou chimique entraînant la rétention des composés organiques volatils à sa surface. Cette rétention est réversible et les composés peuvent être relargués par des techniques de désorption.

De manière préférée selon l'invention, ledit support adsorbant est choisi parmi les compresses, les patchs polydimethylsiloxane, les carbones noirs graphitisés, les tamis molécules, de l'alumine, de la silice, et/ou les polymères organiques, ou une combinaison de ceux-ci.

Par compresses sont entendus selon l'invention des pièces de gaze repliées utilisées classiquement dans le domaine médical. On compte par exemple les compresses hydrophiles stériles et les compresses hongroises.

Par noir de carbone ou charbon actif, charbon activé, charbon végétal carbone noir graphitisé, noir de fourneau, noir thermique, noir au tunnel, noir d'acétylène, ou noir de lampe est entendu selon l'invention une forme de carbone traitée pour le rendre très poreux et ainsi augmenter sa très grande surface disponible pour l'adsorption.

Des exemples de noir de carbone entendus selon l'invention peuvent être notamment les produits connus sous les noms de « Carbograph^{®} », « Carbotrap^{®} », « Carbopack^{®} »

Par tamis molécules sont entendus selon l'invention des matériels solides et poreux ayant la propriété d'agir comme un tamis à l'échelle moléculaire. On peut notamment citer des aluminosilicates de métal cristallin ayant un réseau d'interconnexion tridimensionnel de tétraèdres de silice et d'alumine.

Des exemples de tamis molécules entendus selon l'invention peuvent être notamment de la zéolithe ou des produits connus sous les noms de « Carbosieves^{®} », et « Carboxen^{®} ».

Des exemples de polymères organiques entendus selon l'invention peuvent être notamment les produits connus sous les noms de « Chromosorb^{®} », « Porapak^{®} », « Sorb-Star^{®} », « Amberlites^{®} XAD », et « Tenax^{®} », ce dernier étant composé de Poly(2,6-diphenylphenylene oxide).

Par combinaison sont entendus les supports multiples comprenant différents types desdits supports. On peut par exemple citer les fibre SPME DVB-carboxen-PDMS.

De manière encore plus préférée selon l'invention, ledit support absorbant est un polymère organique connu sous le nom de « Sorb-Star^{®} ».

De manière préférée selon l'invention, le circuit est fermé par obturation de la chambre de prélèvement pendant la recirculation du flux d'air.

Par obturation est entendu selon l'invention que la chambre de prélèvement se referme une fois le flux d'air entré afin de fermer le circuit.

Par circuit fermé est entendu selon l'invention que le même flux d'air passe plusieurs fois dans le support sorbant afin de l'enrichir.

De manière préférée selon l'invention, le circuit est composé de connectiques à usage unique.

Par usage unique est entendu selon l'invention que lesdits connectiques ne sont pas destinées à être réutilisées, et qu'ils peuvent donc être jetées après utilisation.

Ces connectiques à usage unique sont utilisées pour limiter les risques de contamination du système.

Selon un deuxième aspect, l'invention concerne une méthode de caractérisation des composés organiques volatils présents dans l'air à un rapport d'au moins une partie par billion, comprenant les étapes de :
- Prélèvement des composés organiques volatils à l'aide du dispositif selon l'invention ;
- Retrait du support sorbant dudit dispositif de prélèvement ;
- Désorption des composés organiques volatils ;
- Chromatographie en phase gazeuse ;
- Spectrométrie de masse.

Par partie par billion (ppb) est entendu selon l'invention l'équivalent français de « parts per trillon » (ppt) en anglais, correspondant à un rapport de 10⁻¹².

Par prélèvement des composés organiques volatils est entendu selon l'invention d'appliquer au niveau de l'endroit où la caractérisation des composés organiques volatils est nécessaire le dispositif selon l'invention afin d'enrichir un support sorbant avec lesdits composés organiques volatils présents à cet endroit.

De manière préférée selon l'invention, ce prélèvement des composés organiques volatils est réalisé dans le but de caractériser la signature odorante d'un individu.

Par signature odorante est entendu selon l'invention une odeur qui caractérise un individu. Les composés organiques volatils sont constitutifs de l'odeur humaine, que l'on peut résumer comme composée de 3 types d'odeurs. L'odeur primaire, stable au cours du temps et caractéristique d'une personne, a une composante génétique ayant attrait au complexe majeur d'histocompatibilité, ainsi qu'une composante liée aux glandes sébacées et sudorales, et aux bactéries. L'odeur secondaire est quant à elle variable, et constituée de composés endogènes provenant comme pour l'odeur primaire des glandes sébacées et sudorales et des bactéries, mais également de l'environnement dans lequel évolue l'individu, son régime alimentaire, etc. Enfin, l'odeur tertiaire est encore plus variable que l'odeur secondaire, et est constituée de composés exogènes, tels que des bactéries, et des cosmétiques, savons, parfums, etc., utilisés par l'individu. Ces composantes forment la signature odorante d'un individu.

De manière préférée selon l'invention, ladite méthode permet la caractérisation des composés organiques volatils présents dans l'air à un rapport allant jusqu'à une partie par millier.

De manière préférée selon l'invention, ce prélèvement est effectué sur une scène de crime.

De manière préférée selon l'invention, ledit prélèvement est effectué dans un véhicule.

De manière préférée selon l'invention, ledit prélèvement est effectué près d'une chaîne industrielle de production ou de fabrication.

Par chaîne industrielle de production ou de fabrication est entendu selon l'invention une chaîne comprenant une suite d'étape, par exemple réalisée dans une usine, pouvant être automatisée ou pouvant faire intervenir du personnel et permettant la production d'un produit ou sa fabrication. Cette chaîne industrielle de production ou de fabrication peut ainsi rejeter dans l'air des composés organiques volatils en raison des produits, matériaux ou des machines utilisés.

De manière préférée selon l'invention, ledit prélèvement est effectué près d'un patient.

De manière préférée selon l'invention, ledit prélèvement est effectué dans un lieu ayant subi un incendie.

De manière préférée selon l'invention, ledit prélèvement est effectué pendant une durée de 1 minute à 24 heures.

De manière encore plus préférée selon l'invention, ledit prélèvement est effectué pendant une durée de 5 minutes à 10 heures.

Par retrait du support sorbant est entendu selon l'invention la sortie dudit support du dispositif de prélèvement.

Par désorption des composés organiques volatils est entendu l'étape inverse de la sorption, à savoir le détachement des composés organiques volatils du support sorbant.

De manière préférée selon l'invention, ladite méthode est réalisée à partir d'un échantillon d'air.

De manière encore plus préférée selon l'invention, ledit échantillon d'air provient d'un espace confiné. Des exemples non limitatifs d'espaces confinés peuvent être un véhicule, une pièce d'un bâtiment, ou encore un ascenseur.

De manière préférée, ledit échantillon d'air est d'un volume allant de 1dm³ à 10 m³ d'air.

De manière préférée selon l'invention, ladite étape de désorption est une étape de thermodésorption. Par étape de thermodésorption, ou désorption thermique, est entendu selon l'invention l'extraction des composés volatils présents à la surface ou au sein du support sorbant, par application d'une source de chaleur.

De manière préférée selon l'invention, l'étape de thermodésorption est réalisée par chauffage à une température comprise entre 150°C à 300°C, pendant une durée comprise entre 1 minute à 60 minutes.

De manière encore plus préférée selon l'invention, l'étape de thermodésorption est réalisée par chauffage à une température comprise entre 200°C à 280°C, pendant une durée comprise entre 5 minutes à 20 minutes.

Par chromatographie en phase gazeuse est entendu selon l'invention une technique permettant de séparer les composés organiques volatils en fonction de leur affinité pour une phase stationnaire.

De manière préférée selon l'invention, l'étape de chromatographie en phase gazeuse est une étape de chromatographie en phase gazeuse en deux dimensions. Cette chromatographie en phase gazeuse à deux dimensions, ou chromatographie en phase gazeuse bidimensionnelle est caractérisée par le fait que la séparation des composés se fait à travers deux colonnes, placées l'une à la suite de l'autre, et couplées à travers un système de modulation.

Par étape de spectrométrie de masse est entendu selon l'invention une technique qui permet de détecter et d'identifier les composés organiques volatils par mesure de leur masse, et d'obtenir des données structurales.

Les étapes de chromatographie et de spectrométrie de masse permettent d'analyser et de caractériser lesdits composés organiques volatils.

Selon un troisième aspect, l'invention concerne l'utilisation du dispositif selon l'invention pour caractériser la signature odorante d'un individu.

Selon un quatrième aspect, l'invention concerne l'utilisation du dispositif selon l'invention pour enrichir un support sorbant et permettre à un chien d'identifier un individu à partir de sa signature odorante.

Par chien est entendu selon l'invention de préférence un chien de détection entraîné par les services de polices et/ou de gendarmerie, pour détecter des matières ou des individus. Des exemples non limitatifs de races de chiens de détection sont le berger belge malinois, le berger allemand, le berger belge Tervueren, le Staffordshire, le Springer, le beagle, ou le Saint-Hubert.

Les différents aspects de cette invention permettent ainsi d'envisager différentes applications pour celle-ci, sans qu'elle ne soit limitées à ceux-ci. On peut premièrement envisager de l'utiliser en criminalistique, par exemple dans la recherche de criminels, la recherche d'hydrocarbures sur des scènes d'incendies, ou plus généralement l'analyse chimique au sens large. Elle peut également s'appliquer au domaine des secours, dans la recherche de personnes disparues, ou dans le domaine médical pour le diagnostic précoce, par exemple dans le cas d'identification de molécules signatures de cancers, ou encore dans le milieu industriel tel que l'agro-alimentaire, la chimie, la pharmaceutique, etc.

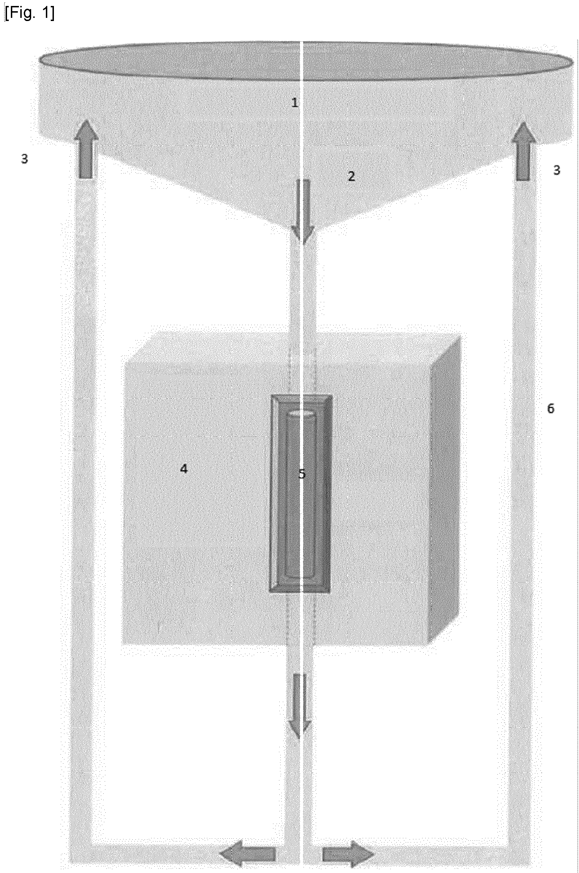

La [Fig. 1] décrit un exemple de dispositif selon l'invention.

En rapport avec la figure, la chambre de prélèvement (1) du dispositif selon l'invention permet l'entrée de l'air dans le dispositif. Le flux d'air entrant (2) est entraîné grâce au système de pompage déporté (4) au travers du support sorbant (5). Le flux d'air en recirculation (3) est ensuite redirigé par les connectiques (6) vers la chambre de prélèvement (1)

Exemple 1 : Utilisation du dispositif selon l'invention lors d'opérations de recherche d'individu.

Un opérateur muni d'une combinaison étanche dispose le dispositif selon l'invention comprenant, en références aux figures, une chambre de prélèvement (1), un système de pompage déporté (4), un support sorbant (5) et un circuit (6) permettant la recirculation (3) du flux d'air entrant (2) vers la chambre de prélèvement, dans l'habitacle d'un véhicule dans lequel on souhaite rechercher la présence d'une signature odorante d'un individu ayant pu séjourner dans le véhicule.

L'opérateur démarre le système de pompage déporté (4) selon l'invention afin d'enrichir le support sorbant (5) selon l'invention.

Après 30 minutes d'utilisation, ledit système de pompage (4) est arrêté et le support sorbant (5) est retirée avec précaution du dispositif selon l'invention, afin de ne pas le contaminer.

Le support sorbant (5) est ensuite envoyé en laboratoire, et est désorbé par application d'une source de chaleur.

Les éléments désorbés sont ensuite analysés et identifiés par chromatographie en phase gazeuse bidirectionnelle suivie d'une spectrométrie de masse, permettant de caractériser la signature odorante présente dans le véhicule.

Cette signature odorante peut ensuite être comparée à celle de l'individu, caractérisée dans un environnement où la personne recherchée a été présente, et ainsi permettre de conclure quant à sa présence dans ce véhicule.

Exemple 2 : Utilisation du dispositif selon l'invention à la suite d'une effraction dans une habitation (effraction, home jacking, violences perpétrées sur personne...).

Des opérateurs munis de combinaisons étanches disposent plusieurs dispositifs selon l'invention dans l'habitation dans laquelle l'effraction, le home jacking ou les violences ont eu lieu.

Les opérateurs démarrent les systèmes de pompage (4) selon l'invention afin d'enrichir les support sorbants (5) selon l'invention.

Après 30 minutes d'utilisation, lesdits systèmes de pompage (4) sont arrêtés et les supports sorbants (5) sont retirés avec précaution des dispositifs selon l'invention, afin de ne pas les contaminer.

Les supports sorbants (5) sont ensuite envoyés en laboratoire, et sont désorbés par application d'une source de chaleur.

Les éléments désorbés sont ensuite analysés et identifiés par chromatographie en phase gazeuse bidirectionnelle suivie d'une spectrométrie de masse, permettant de caractériser la signature odorante présente dans l'habitation.

Cette signature odorante est ensuite utilisée quand un suspect est appréhendé, une fois sa signature odorante caractérisée, afin de le confondre et de caractériser sa présence sur les lieux du crime.

Exemple 3 : Utilisation du dispositif selon l'invention pour identifier des composés organiques volatils entrant dans la composition de produits inflammables.

Un opérateur muni d'une combinaison étanche dispose le dispositif selon l'invention dans l'habitacle d'un véhicule calciné dans lequel on souhaite rechercher la présence de composés organiques volatils pouvant entrer dans la composition de produits inflammables, tel que par exemple de l'alcool à brûler, des carburants, des solvants, ou encore des diluants tels que du white spirit.

L'opérateur démarre le système de pompage (4) selon l'invention afin d'enrichir le support sorbant (5) selon l'invention.

Après 30 minutes d'utilisation, ledit système de pompage (4) est arrêté et le support sorbant (5) est retirée avec précaution du dispositif selon l'invention, afin de ne pas le contaminer.

Le support sorbant (5) est ensuite envoyée en laboratoire, et est désorbée par application d'une source de chaleur.

Les éléments désorbés sont ensuite analysés et identifiés par chromatographie en phase gazeuse bidirectionnelle suivie d'une spectrométrie de masse, permettant de caractériser les composés organiques volatils présents dans le véhicule calciné.

Les composés organiques volatils identifiés peuvent ensuite être comparés à ceux contenus dans divers produits inflammables et ainsi identifier le produit inflammable utilisé pour brûler le véhicule.

Exemple 4 : Utilisation du dispositif selon l'invention sur une chaîne industrielle de production ou de fabrication pour déterminer la teneur en composés organiques volatils rejetés et exposés au personnel, et potentiellement identifier un problème dans la chaîne industrielle.

Un opérateur dispose le dispositif selon l'invention auprès de la chaîne de production/fabrication pour laquelle on veut déterminer les émissions de composés organiques.

L'opérateur démarre le système de pompage (4) selon l'invention afin d'enrichir le support sorbant (5) selon l'invention.

Après 8 heures d'utilisation, ledit système de pompage (4) est arrêté et le support sorbant (5) est retiré avec précaution du dispositif selon l'invention, afin de ne pas le contaminer.

Le support sorbant est ensuite envoyé en laboratoire, et est désorbé par application d'une source de chaleur.

Les éléments désorbés sont ensuite analysés et identifiés par chromatographie en phase gazeuse bidirectionnelle suivie d'une spectrométrie de masse, permettant de caractériser les composés organiques volatils rejetés par la chaîne de production/fabrication.

Les composés organiques volatils identifiés peuvent ensuite être comparés à ceux rejetés classiquement par la chaîne de production, afin de caractériser une dérive de fabrication liée à un problème sur la chaîne de production, et les composés organiques volatils auxquels le personnel est exposé.

Exemple 5 : Utilisation du dispositif selon l'invention dans le milieu médical dans le cadre de prélèvement d'odeur non invasif a usage diagnostique (recherche de molécules cibles ou de marqueurs).

Un opérateur dispose le dispositif selon l'invention auprès d'un patient pour lequel on veut déterminer la présence de composés organiques volatils.

L'opérateur démarre le système de pompage (4) selon l'invention afin d'enrichir le support sorbant (5) selon l'invention.

Après 15 minutes d'utilisation, ledit système de pompage (4) est arrêté et le support sorbant (5) est retiré avec précaution du dispositif selon l'invention, afin de ne pas le contaminer.

Le support sorbante (5) est ensuite envoyé en laboratoire, et est désorbé par application d'une source de chaleur.

Les éléments désorbés sont ensuite analysés et identifiés par chromatographie en phase gazeuse bidirectionnelle suivie d'une spectrométrie de masse, permettant de caractériser les composés organiques volatils présents dans l'odeur du patient.

Les composés organiques volatils identifiés sont ensuite comparés à ceux classiquement identifiés dans différentes pathologies, et ainsi l'opérateur peut arrêter un diagnostic pertinent pour le patient, sans prélèvement invasif.

Exemple 6 : Utilisation du dispositif selon l'invention dans le milieu médical dans le cadre d'un suivi de thérapie.

Un opérateur dispose le dispositif selon l'invention auprès d'un patient pour lequel on veut déterminer la présence de composés organiques volatils.

L'opérateur démarre le système de pompage (4) selon l'invention afin d'enrichir le support sorbant (5) selon l'invention.

Après 15 minutes d'utilisation, ledit système de pompage (4) est arrêté et le support sorbant est retiré avec précaution du dispositif selon l'invention, afin de ne pas le contaminer.

Le support sorbant (5) est ensuite envoyé en laboratoire, et est désorbé par application d'une source de chaleur.

Les éléments désorbés sont ensuite analysés et identifiés par chromatographie en phase gazeuse bidirectionnelle suivie d'une spectrométrie de masse, permettant de caractériser les composés organiques volatils présents dans l'odeur du patient.

Les composés organiques volatils identifiés sont ensuite comparés à ceux identifiés durant l'étude précédente réalisée pour le même patient, afin sans prélèvement invasif de déceler l'émission de nouvelles molécules ou marqueurs qui pourraient être autant d'indice du développement d'une pathologie ou de la guérison d'un patient.

Dans le cadre de cet exemple, l'utilisation du dispositif selon l'invention est régulière afin d'obtenir un suivi du patient.

## Revendications

1. Dispositif permettant de prélever les composés organiques volatils dans l'air comprenant :
- Une chambre de prélèvement (1) permettant l'entrée d'un flux d'air dans le dispositif ;
- Un système de pompage déporté (4) basé sur une alternance de cycles d'aspiration et d'éjection du flux d'air ;
- Un support sorbant (5) ;
- Un circuit permettant un système de recirculation du flux d'air entrant (2) ;
**caractérisé en ce que** ledit système de pompage déporté (4) basé sur une alternance de cycles d'aspiration et d'éjection du flux d'air est une pompe péristaltique.

2. Dispositif selon la revendication 1, **caractérisé en ce que** ledit support sorbant (5) est un support absorbant.

3. Dispositif selon la revendication 1, **caractérisé en ce que** ledit support sorbant (5) est un support adsorbant.

4. Dispositif selon la revendication 2, **caractérisé en ce que** ledit support absorbant est choisi parmi les cyclodextrines, le bisulfite de sodium, et/ou le dinitrophénylhydrazine.

5. Dispositif selon la revendication 3, **caractérisé en ce que** ledit support adsorbant est choisi parmi les compresses, les patchs polydimethylsiloxane, les noirs de carbone, les tamis molécules, et/ou les polymères organiques, ou une combinaison de ceux-ci.

6. Dispositif selon les revendications précédentes, **caractérisé en ce que** le circuit est fermé par obturation de la chambre de prélèvement (1) pendant la recirculation (3) du flux d'air.

7. Dispositif selon les revendications précédentes, **caractérisé en ce que** le circuit est composé de connectiques (6) à usage unique.

8. Méthode de caractérisation des composés organiques volatils présents dans l'air, comprenant les étapes de :
- Prélèvement des composés organiques volatils ;
- Retrait du support sorbant (5) dudit dispositif de prélèvement ;
- Désorption des composés organiques volatils ;
- Chromatographie en phase gazeuse ;
- Spectrométrie de masse
**caractérisé en ce que** l'étape de prélèvement des composés organiques volatils est réalisée à l'aide d'un dispositif selon l'une quelconque des revendications précédentes.

9. Méthode selon la revendication 8, **caractérisée en ce qu'**elle est réalisée à partir d'un échantillon d'air.

10. Méthode selon les revendications 8 et 9, **caractérisée en ce que** l'étape de désorption est constituée par une étape de thermodesorption.

11. Méthode selon les revendications 8 à 10, **caractérisée en ce que** l'étape de chromatographie en phase gazeuse est constituée par une étape de chromatographie en phase gazeuse en deux dimensions.

12. Utilisation du dispositif selon les revendications 1 à 7, pour caractériser la signature odorante d'un individu.

13. Utilisation du dispositif selon les revendications 1 à 7, pour enrichir un support sorbant (5) et permettre à un chien d'identifier un individu à partir de sa signature odorante.

## Patentansprüche

1. Vorrichtung, die ein Entnehmen der flüchtigen organischen Verbindungen aus der Luft ermöglicht, umfassend:
- eine Entnahmekammer (1), die den Eintritt eines Luftstroms in die Vorrichtung ermöglicht;
- ein entferntes Pumpsystem (4), das auf einem Wechsel von Ansaug- und Ausstoßzyklen des Luftstroms basiert;
- einen Sorptionsträger (5);
- eine Schaltung, die ein System zur Rezirkulation des eintretenden Luftstroms (2) ermöglicht;
**dadurch gekennzeichnet, dass** das entfernte Pumpsystem (4), das auf einem Wechsel von Ansaug- und Ausstoßzyklen des Luftstroms basiert, eine peristaltische Pumpe ist.

2. Vorrichtung nach Anspruch 1, **dadurch gekennzeichnet, dass** der Sorptionsträger (5) ein Absorptionsträger ist.

3. Vorrichtung nach Anspruch 1, **dadurch gekennzeichnet, dass** der Sorptionsträger (5) ein Adsorptionsträger ist.

4. Vorrichtung nach Anspruch 2, **dadurch gekennzeichnet, dass** der Absorptionsträger aus Cyclodextrinen, Natriumhydrogensulfit und/oder Dinitrophenylhydrazin ausgewählt ist.

5. Vorrichtung nach Anspruch 3, **dadurch gekennzeichnet, dass** der Adsorptionsträger aus Kompressen, Polydimethylsiloxan-Patches, Ruß, Molekularsieben und/oder organischen Polymeren oder einer Kombination davon ausgewählt ist.

6. Vorrichtung nach den vorstehenden Ansprüchen,
**dadurch gekennzeichnet, dass** der Kreislauf durch Abdichten der Entnahmekammer (1) während der Rezirkulation (3) des Luftstroms geschlossen wird.

7. Vorrichtung nach den vorstehenden Ansprüchen,
**dadurch gekennzeichnet, dass** der Kreislauf aus Anschlüssen (6) zum einmaligen Gebrauch zusammengesetzt ist.

8. Verfahren zum Charakterisieren der in der Luft vorhandenen flüchtigen organischen Verbindungen, umfassend die Schritte:
- Entnehmen der flüchtigen organischen Verbindungen;
- Entfernen des Sorptionsträgers (5) aus der Entnahmevorrichtung;
- Desorption der flüchtigen organischen Verbindungen;
- Gaschromatographie;
- Massenspektrometrie
**dadurch gekennzeichnet, dass** der Schritt des Entnehmens der flüchtigen organischen Verbindungen mit Hilfe einer Vorrichtung nach einem der vorstehenden Ansprüche umgesetzt wird.

9. Verfahren nach Anspruch 8, **dadurch gekennzeichnet, dass** es aus einer Luftprobe umgesetzt wird.

10. Verfahren nach den Ansprüchen 8 und 9, **dadurch gekennzeichnet, dass** der Desorptionsschritt aus einem Thermodesorptionsschritt besteht.

11. Verfahren nach den Ansprüchen 8 bis 10,
**dadurch gekennzeichnet, dass** der Schritt der Gaschromatographie durch einen Schritt der zweidimensionalen Gaschromatographie gebildet wird.

12. Verwendung der Vorrichtung nach den Ansprüchen 1 bis 7, zum Charakterisieren der Geruchssignatur eines Individuums.

13. Verwendung der Vorrichtung nach den Ansprüchen 1 bis 7, zum Anreichern eines Sorptionsträgers (5) und um einem Hund zu ermöglichen, ein Individuum anhand seiner Geruchssignatur zu identifizieren.

## Claims

1. Device for sampling volatile organic compounds in the air, comprising:
- a sampling chamber (1) allowing an airflow to enter the device;
- a remote pumping system (4) based on alternating cycles of suctioning and ejecting the airflow;
- a sorbent support (5);
- a circuit for a system for recirculating the incoming airflow (2);
**characterized in that** said remote pumping system (4) based on alternating cycles of suctioning and ejecting the airflow is a peristaltic pump.

2. Device according to claim 1, **characterized in that** said sorbent support (5) is an absorbent support.

3. Device according to claim 1, **characterized in that** said sorbent support (5) is an adsorbent support.

4. Device according to claim 2, **characterized in that** said absorbent support is selected from cyclodextrins, sodium bisulfite, and/or dinitrophenylhydrazine.

5. Device according to claim 3, **characterized in that** said adsorbent support is selected from compresses, polydimethylsiloxane patches, carbon blacks, molecular sieves, and/or organic polymers, or a combination thereof.

6. Device according to the preceding claims, **characterized in that** the circuit is closed by sealing the sampling chamber (1) during the recirculation (3) of the airflow.

7. Device according to the preceding claims, **characterized in that** the circuit is made up of single-use connections (6).

8. Method for distinguishing volatile organic compounds present in the air, comprising the steps of:
- sampling the volatile organic compounds;
- removing the sorbent support (5) from said sampling device;
- desorbing the volatile organic compounds;
- performing gas chromatography;
- performing mass spectrometry,
**characterized in that** the step of sampling the volatile organic compounds is carried out using a device according to any one of the preceding claims.

9. Method according to claim 8, **characterized in that** it is carried out using an air sample.

10. Method according to claims 8 and 9, **characterized in that** the desorption step consists of a thermal desorption step.

11. Method according to claims 8 to 10, **characterized in that** the gas chromatography step consists of a two-dimensional gas chromatography step.

12. Use of the device according to claims 1 to 7 in order to distinguish the scent signature of an individual.

13. Use of the device according to claims 1 to 7 in order to enrich a sorbent support (5) and allow a dog to identify an individual from their scent signature.
